# FASCICULE DE BREVET EUROPEEN

(11) **EP 0 903 793 B1**
(45) Date de publication et mention de la délivrance du brevet: **03.04.2002**
(21) Numéro de dépôt: 98420161.6
(22) Date de dépôt: 17.09.1998
(51) Int. Cl.: H01M 2/10, A63H 29/22

(54) **Boîtier à piles pour jouet, et jouet équipé d'un tel boîtier**
Batteriegehäuse für Spielzeug und Spielzeug mit einem solchen Gehäuse
Battery casing for toys and toy comprising such casing

(30) Priorité: 19.09.1997 FR 9711907
(43) Date de publication de la demande: 24.03.1999
(73) Titulaire: SMOBY, F-39170 Lavans les Saint Claude (FR)
(72) Inventeur: Breuil, Jean-Christophe, 39170 Lavans-Les-Saint-Claude (FR)
(74) Mandataire: Myon, Gérard Jean-Pierre

(56) Documents cités:
- EP-A- 0 716 461
- PATENT ABSTRACTS OF JAPAN vol. 095, no. 009, 31 octobre 1995 -& JP 07 147489 A (MATSUSHITA ELECTRIC IND CO LTD), 6 juin 1995
- PATENT ABSTRACTS OF JAPAN vol. 005, no. 086 (E-060), 5 juin 1981 -& JP 56 032673 A (CANON INC), 2 avril 1981

## Description

La présente invention a trait à un boîtier à piles pour jouet, du type comprenant un logement de réception de piles en série formant circuit électrique, destiné à être fermé au moyen d'un capot déplaçable comportant un élément coulissant, le logement comprenant au moins deux compartiments dont un premier compartiment reçoit au moins une pile d'extrémité du circuit

On connaît de tels boîtiers dont le logement est fermé par l'intermédiaire d'un capot rigide, par exemple en matière plastique, qui est pourvu de pattes assurant son encliquetage élastique sur les parois du logement.

Le problème lié à ce type de boîtier réside dans le fait qu'il est possible d'accéder simultanément à l'ensemble des piles disposées dans le logement. De la sorte, il existe un risque de réaliser un court-circuit entre des piles en manipulant le boîtier ou en insérant un objet métallique, dans le boîtier, au contact des piles. Ceci a pour effet d'entraîner, outre une diminution notable de la durée de vie des piles, des échauffements susceptibles de brûler un enfant.

L'invention a donc pour objet de pallier les inconvénients de l'art antérieur évoqués ci-dessus, et se propose de réaliser un boîtier à piles dont l'agencement évite tout court-circuit au sein du boîtier.

A cet effet, l'invention a pour objet un boîtier à piles du type précité, caractérisé en ce que l'élément coulissant est destiné à recouvrir, dans une position avancée, le premier compartiment, le capot comportant un élément complémentaire de fermeture apte à être dégagé, dans la position avancée de l'élément coulissant, pour l'introduction de piles dans au moins un second compartiment adjacent audit premier compartiment et le capot étant muni de moyens de blocage de l'élément coulissant dans sa position avancée lorsque les piles sont disposées dans le second compartiment.

L'invention permet d'atteindre les objectifs précédemment mentionnés. En effet, le boîtier qui en fait l'objet oblige l'utilisateur à introduire tout d'abord la ou les piles d'extrémité dans le premier compartiment puis à faire coulisser le capot vers une position dans laquelle il empêche l'accès à ce premier compartiment, avant de procéder à l'insertion de la ou des autres piles.

Lors de leur montage, les piles d'extrémité ne peuvent donc pas être mises en court-circuit puisque les autres piles sont absentes et donc le circuit électrique est ouvert.

De plus, lorsque l'ensemble des piles a été placé, tout court-circuit est également impossible puisque l'utilisateur ne peut accéder au premier compartiment du fait de la présence des moyens de blocage.

Selon une première caractéristique de l'invention, les compartiments sont disposés dans le sens de déplacement du capot.

Selon une autre caractéristique avantageuse de l'invention, les moyens de blocage viennent en butée contre l'extrémité des piles disposées dans le second compartiment. En particulier, ces moyens de blocage comprennent des taquets faisant saillie à partir de la face intérieure de l'élément coulissant et aptes à venir en butée contre l'extrémité des piles disposées dans le second compartiment.

Selon une autre caractéristique avantageuse de l'invention, le logement comporte une surface d'extrémité déformable élastiquement selon l'axe de déplacement de l'élément coulissant. Ceci permet une insertion plus aisée des piles au sein du logement.

La surface d'extrémité peut alors s'étendre à partir du fond du logement à distance d'un bord du boîtier et des parois latérales du logement.

Selon une caractéristique supplémentaire de l'invention, l'élément complémentaire est muni d'ergots aptes à repousser, dans la position avancée de l'élément coulissant, la surface d'extrémité du logement en direction des piles. Cet agencement garantit un parfait contact électrique après le montage des piles, en évitant une déformation permanente de cette surface d'extrémité élastique.

Selon une caractéristique supplémentaire de l'invention, les taquets sont aptes à venir en butée contre la surface d'extrémité, dans une position reculée de l'élément coulissant. Ceci permet de limiter la course du capot et donc de ne pas désolidariser ce dernier vis-à-vis du boîtier lors de l'insertion des piles dans le premier compartiment.

Selon une caractéristique supplémentaire de l'invention, l'élément coulissant est pourvu de languettes latérales aptes à s'engager dans les rainures du boîtier.

Selon une caractéristique avantageuse de l'invention, ces languettes s'évasent depuis l'intérieur vers l'extérieur de l'élément coulissant, en faisant référence au capot une fois fixé sur le boîtier. Cet agencement permet une insertion aisée des languettes dans les rainures au niveau de la chaîne de montage, et empêche l'élément coulissant, une fois installé, d'être désolidarisé du boîtier à la suite de contraintes perpendiculaires à son plan.

Selon une autre caractéristique avantageuse de l'invention, l'élément complémentaire est un élément pivotant relié audit élément coulissant par une charnière. L'accès au second compartiment est ainsi particulièrement aisé, puisqu'il suffit de relever cet élément pivotant.

L'invention a également pour objet un jouet équipé d'un boîtier à piles présentant une ou plusieurs des caractéristiques précédemment mentionnées.

L'invention va être décrite ci-dessous, en référence aux dessins annexés, donnés uniquement à titre d'exemple non limitatif et dans lesquels :
- la figure 1 est une vue en perspective par dessous d'un jouet équipé d'un boîtier à piles conforme à l'invention ;
- la figure 2 est une vue en perspective du boîtier de la figure 1 et d'un capot destiné à l'obturer ;
- la figure 3 est une vue en coupe selon la ligne III-III à la figure 2, du boîtier conforme à l'invention, sur lequel est disposé le capot représenté à la figure 2, en position avancée ;
- les figures 4 et 5 sont des vues en coupe respectivement selon les lignes IV-IV et V-V de la figure 3 .
- la figure 6 est une vue analogue à la figure 3, représentant le capot en position reculée et
- la figure 7 est une vue extérieure partielle du capot en position reculée.

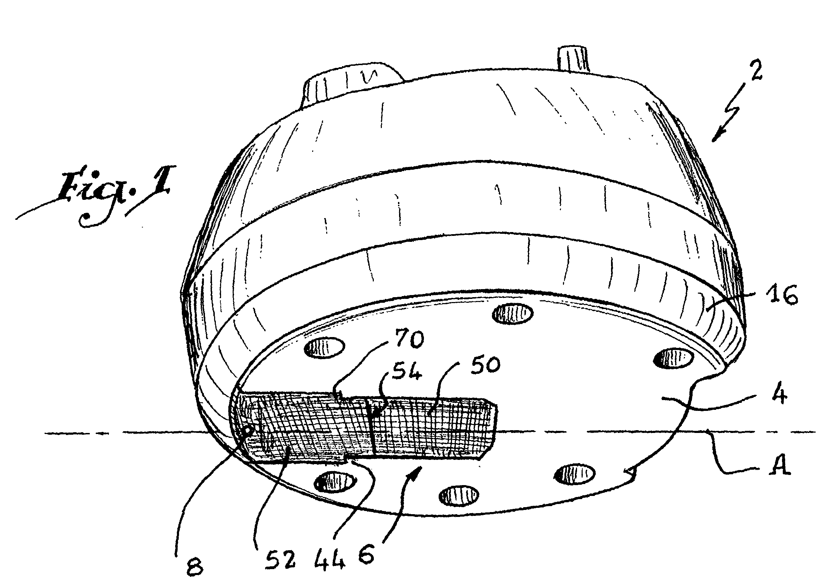

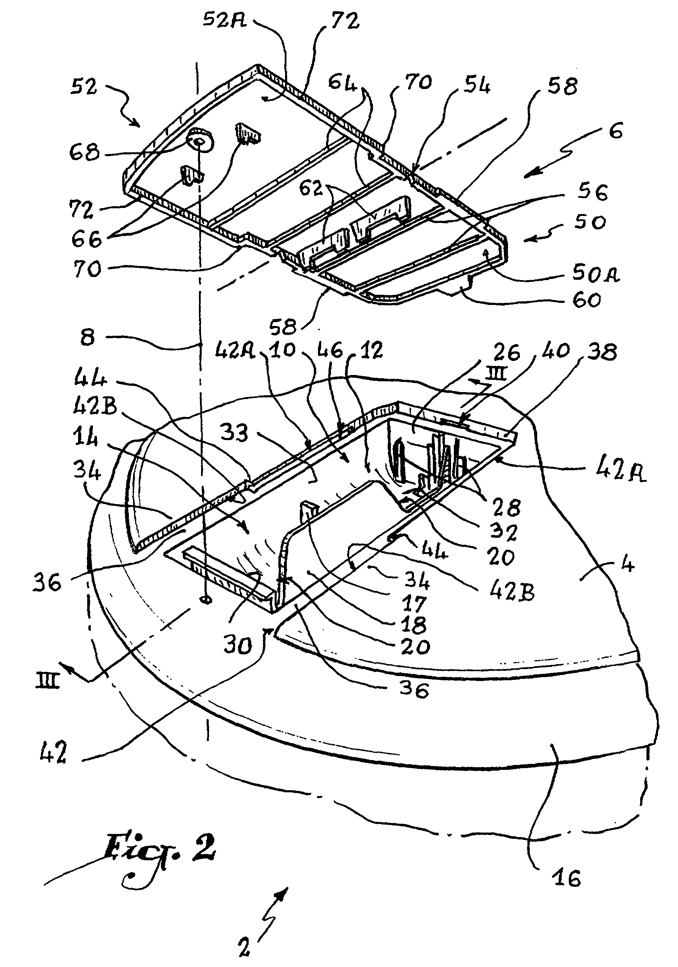

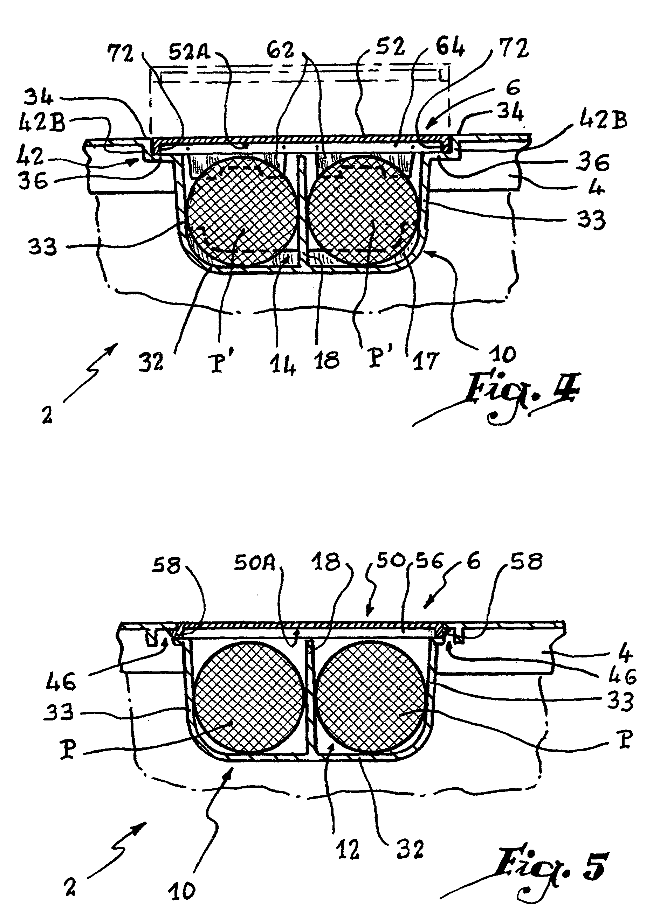

Le jouet représenté à la figure 1 et désigné dans son ensemble par la référence 2 est un tour de potier, étant bien évidemment entendu que l'invention s'applique à tout autre type de jouet. Ce tour de potier est vu par dessous, et il est pourvu à son extrémité inférieure d'un boîtier à piles 4 fermé au moyen d'un capot 6 assujetti au boîtier par l'intermédiaire d'une vis 8. La structure du boîtier 4 et du capot 6 va être décrite en référence aux figures 2 à 7, en supposant le boîtier retourné.

Comme le montre la figure 2, le boîtier comprend un logement 10 sensiblement parallélépipédique permettant la réception de quatre piles au sein de deux compartiments 12, 14. Dans la suite de la description et pour plus de clarté, on désignera par 12 le compartiment central et 14 le compartiment externe, à savoir celui adjacent au bord périphérique 16 du boîtier 4. On désigne également par A l'axe du logement, qui s'étend sensiblement selon un diamètre du boîtier 4 circulaire.

Les deux compartiments 12, 14 sont séparés l'un de l'autre par une cloison transversale 17 ajourée de manière à assurer la mise en contact des bornes positive et négative de piles adjacentes.

De plus, le logement 10 est divisé par une paroi axiale 18 destinée à séparer les piles disposées au sein d'un même compartiment. Cette paroi 18 est pourvue de deux décrochements 20 permettant une meilleure préhension des piles qui peuvent ainsi être otées aisément.

Le compartiment central 12 est destiné à recevoir les piles d'extrémité du circuit. A cet effet, la surface transversale 26 de ce compartiment 12 est pourvue de griffes 28 permettant l'installation de deux lames conductrices non représentées, disposées de part et d'autre de la paroi de séparation 18.

Le logement 10 est en outre pourvu d'une surface externe 30 s'étendant à partir du fond 32 du logement, à distance du bord 16 du boîtier et des parois latérales 33 du logement. Cette surface 30 est réalisée en un matériau élastiquement déformable et sa fonction sera explicitée en regard des figures suivantes. Elle comprend également des griffes non représentées pour la fixation d'une unique lame conductrice reliant des piles disposées de part et d'autre de la paroi 18, au sein du compartiment externe 14.

Le boîtier 4 comporte un épaulement 34 s'étendant à la périphérie du logement 10 de manière à définir un rebord supérieur 36 de celui-ci. La surface interne 38 de l'épaulement 34, à savoir celle disposée au-dessus de la surface interne 26 du logement 10, est pourvue d'une encoche 40 rectangulaire permettant le passage d'un doigt du capot 6, comme cela sera décrit par la suite.

Les surfaces latérales 42 de l'épaulement 34 présentent un décrochement 44 qui délimite des portions internes 42A et externes 42B de ces surfaces latérales. Ces portions internes 42A sont évidées de manière à former des rainures 46 dont la fonction sera explicitée par la suite. Une douille 48 cylindrique fait en outre saillie vers le bas, à partir de la zone du bord 16 du boîtier adjacente à la surface externe 30 du logement, pour recevoir la vis 8.

Le capot 6, également représenté à la figure 2, comprend un élément coulissant 50 relié à un élément pivotant 52 qui constitue un élément complémentaire de fermeture du boîtier, au moyen d'une charnière 54 transversale formée par un amincissement de matière.

L'élément coulissant présente, sur sa face intérieure 50A, en faisant référence au capot une fois monté sur le boîtier, des nervures transversales 56. Il est muni de languettes latérales 58 destinées à s'engager dans les rainures 46 dont est pourvu le boîtier 4. Comme le montre plus précisément la figure 5, ces languettes 58 présentent un profil s'évasant vers l'extérieur. L'élément 50 est également pourvu, à son extrémité opposée à l'élément pivotant 52, d'un doigt 60 faisant saillie axialement et destiné à coopérer avec l'encoche 40.

Deux taquets 62 dont la fonction sera explicitée par la suite, font en outre saillie à partir de la face intérieure 50A de cet élément coulissant 50. Ces taquets 62 présentent des dimensions telles que leur déplacement est bloqué par les piles, une fois ces dernières insérées dans le logement 10.

L'élément pivotant 52 du capot 6 est pourvu de nervures transversales 64 analogues à celles 56, ainsi que d'ergots 66 faisant saillie à partir de la face intérieure 52A de cet élément 52. Ce dernier est en outre percé d'un trou 68 destiné à assurer le passage d'une vis. Enfin, les bords transversaux de cet élément 52 comprennent un décrochement 70 analogue à celui 44 réalisé au niveau de l'épaulement 34.

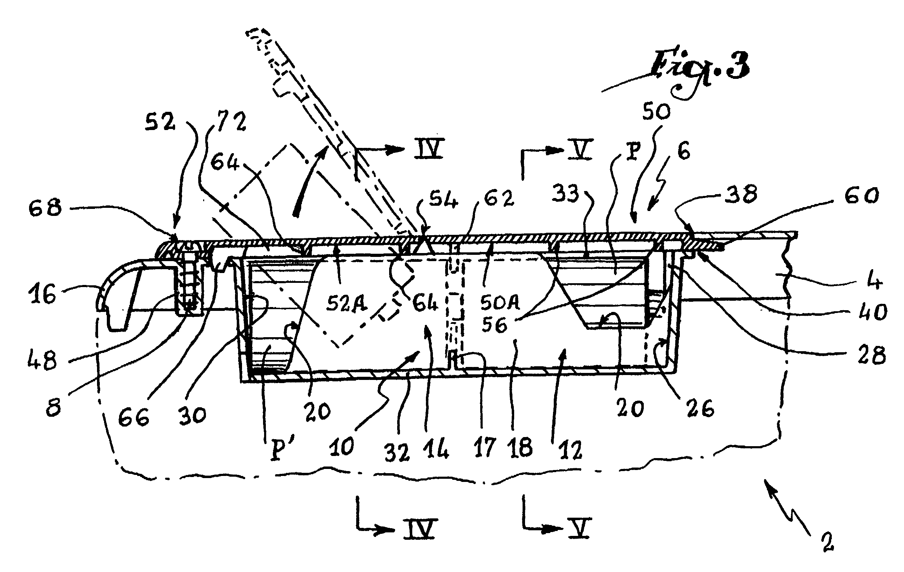

On va maintenant décrire, en faisant référence à l'ensemble des figures 3 à 7, le montage et l'utilisation du boîtier conforme à l'invention. Il s'agit tout d'abord, pour le monteur, d'insérer les languettes 58 dont est équipé le capot:, au sein des rainures 46 du boîtier 4. A cet effet, on introduit une des languettes au sein d'une rainure correspondante, puis on exerce un effort sensiblement perpendiculaire au plan du capot de manière à introduire l'autre languette au sein de sa rainure. Cette opération est facilitée grâce au profil évasé des languettes.

Les figures 1, ainsi que 3 à 5, représentent le capot 6 fixé sur le boîtier 4. L'élément coulissant 50 se trouve alors dans une position avancée, dans laquelle le doigt 60 de cet élément pénètre dans l'encoche 40 du boîtier, les languettes 58 étant engagées sur toute leur longueur au sein des rainures 46. Ces languettes 58 reposent en outre, par leur face inférieure, sur les rebords 36 du logement 10. De plus, la surface 38 du boîtier constitue une surface de butée de l'élément coulissant 50.

L'élément pivotant 52 prend appui, par la face inférieure de ses rebords latéraux 72, sur ce rebord 36. Cet élément pivotant 52 est assujetti au boîtier 4 par l'intermédiaire de la vis 8 représentée à la figure 1, qui est introduite par le trou 68 de cet élément 52, et qui se trouve logée au sein de la douille cylindrique 48 du boîtier.

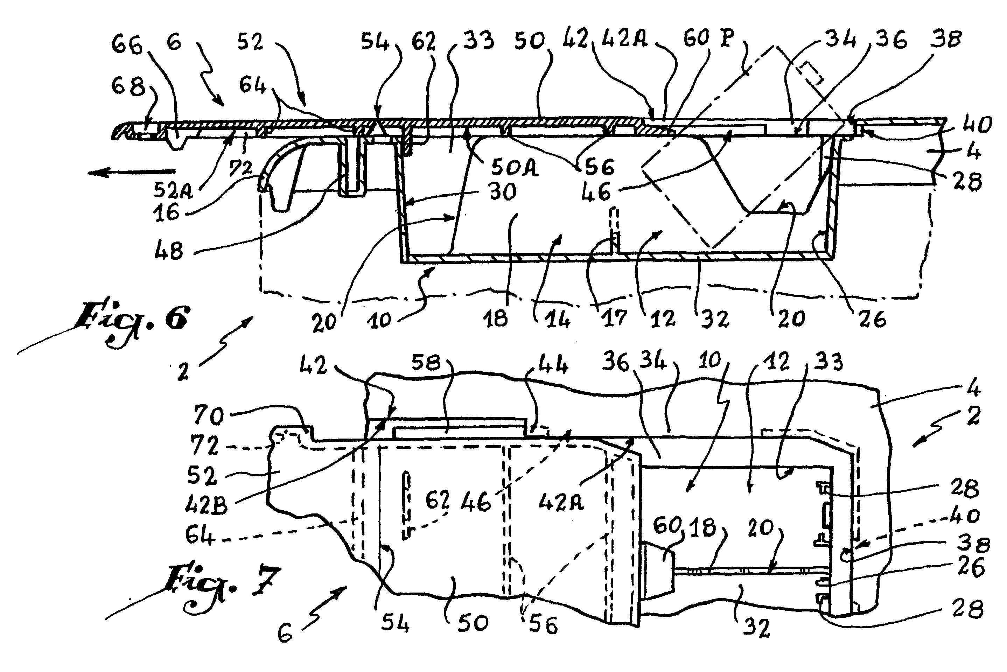

En vue de l'insertion des quatre piles dans le logement 10, il s'agit tout d'abord de désolidariser l'élément pivotant 52 par rapport au boîtier 4, en enlevant la vis 8. Il s'agit ensuite de faire coulisser l'ensemble du capot selon l'axe A du logement, jusqu'à ce que les taquets 62 de l'élément coulissant 50 viennent en butée contre la surface externe 30 du logement qui constitue une surface d'arrêt de cet élément. Ce dernier se trouve alors dans une position reculée représentée aux figures 6 et 7. Il est à noter que, dans cette position, les languettes 58 de l'élément coulissant 50 sont encore engagées partiellement au sein des rainures- 46 du boîtier, de sorte que cet élément 50 est assujetti au boîtier selon une direction perpendiculaire à son plan.

Dans cette position reculée, l'utilisateur a accès au compartiment central 12 du logement 10, de sorte qu'il peut y introduire deux piles P, de part et d'autre de la paroi axiale 18.

L'utilisateur repousse ensuite l'élément coulissant vers sa position avancée représentée aux figures 3 à 5. Il est alors susceptible d'accéder au compartiment externe 14 du logement 10, en relevant L'élément pivotant 52, comme cela est représenté en traits mixtes à la figure 3. L'utilisateur est ainsi à même d'introduire deux piles supplémentaires P' dans ce compartiment 14, de part et d'autre de la paroi axiale 18. Cette opération est facilitée grâce à la nature élastique de la surface externe 30 du logement.

La taille des taquets 62 est telle qu'elle empêche le déplacement de l'élément coulissant 50 vers sa position reculée, lorsque les piles P' sont placées au sein du compartiment externe 14 puisque ces dernières bloquent les taquets. De la sorte, il est nécessaire de disposer tout d'abord les piles P dans le compartiment central 12, puis d'avancer l'élément coulissant de manière à pouvoir loger les autres piles P' dans le compartiment externe 14.

Lors de l'introduction des deux dernières piles P' dans le compartiment externe 14, l'utilisateur ne peut accéder au compartiment central 12 dans la mesure où ce dernier est obturé au moyen de l'élément coulissant 50 qui le recouvre entièrement, cet élément 50 étant bloqué en position grâce aux taquets 62.

L'utilisateur bascule enfin l'élément pivotant 52 de manière à l'amener contre le boîtier, puis solidarise mutuellement ces deux éléments en replaçant la vis 8 au travers du trou 68. Les ergots 66 dont est pourvu l'élément pivotant 52 ont alors tendance à repousser la surface externe 30 en direction de la surface interne 26, ce qui garantit un parfait contact électrique.

Tout court-circuit entre les piles P du compartiment central est donc impossible durant leur mise en place.

En effet, étant donné qu'elles sont nécessairement installées avant les piles P', l'utilisateur y a uniquement accès lorsque le circuit électrique est ouvert.

Le boîtier conforme à l'invention est particulièrement avantageux dans la mesure où il évite que se produise un court-circuit entre les piles d'extrémité du circuit, non seulement durant la phase de montage comme cela a été décrit précédemment, mais également une fois que l'ensemble des piles a été mis en place.

En effet, en supposant que la vis 8 est enlevée, les taquets 62 empêchent de déplacer l'élément coulissant 50 vers sa position reculée, puisqu'ils prennent appui contre les piles P' du compartiment externe.

L'unique moyen d'accéder aux piles P du compartiment central, consiste donc à enlever les piles P' disposées dans le compartiment externe, ce qui conduit nécessairement à ouvrir le circuit électrique.

Pour enlever les piles, il convient tout d'abord de retirer la vis 8, puis de basculer vers le haut l'élément pivotant 52 de manière à pouvoir ôter les piles P' du compartiment externe 14. Puis, on déplace l'élément coulissant 50 vers sa position reculée de manière à accéder au compartiment central 12 afin d'en retirer les piles P qui y étaient placées.

## Revendications

1. Boîtier à piles (4) pour jouet (2), du type comprenant un logement (10) de réception de piles (P, P') en série formant circuit électrique, destiné à être fermé au moyen d'un capot déplaçable (6) comportant un élément coulissant (50), ledit logement (10) comprenant au moins deux compartiments (12, 14) dont un premier compartiment (12) reçoit au moins une pile (P) d'extrémité du circuit, **caractérisé en ce que** ledit élément coulissant (50) est destiné à recouvrir, dans une position avancée, ledit premier compartiment (12), ledit capot (6) comportant un élément complémentaire (52) de fermeture apte à être dégagé, dans la position avancée de l'élément coulissant (50), pour l'introduction de piles (P') dans au moins un second compartiment (14) adjacent audit premier compartiment (12) et le capot (6) étant muni de moyens (62) de blocage de l'élément coulissant (50) dans sa position avancée lorsque les piles (P') sont disposées dans le second compartiment (14).

2. Boîtier selon la revendication 1, **caractérisé en ce que** lesdits compartiments (12, 14) sont disposés selon le sens de déplacement du capot (6).

3. Boîtier selon la revendication 1 ou 2, **caractérisé en ce que** les moyens de blocage comprennent des taquets (62) faisant saillie à partir de la face intérieure (50A) de l'élément coulissant (50) et aptes à venir en butée contre l'extrémité desdites piles (P') disposées dans ledit second compartiment (14).

4. Boîtier selon la revendication 3, **caractérisé en ce que** le logement comprend une surface d'extrémité (30) déformable élastiquement selon l'axe de déplacement (A) de l'élément coulissant (50).

5. Boîtier selon la revendication 4, **caractérisé en ce que** l'élément complémentaire (52) est muni d'ergots (66) aptes à repousser, dans la position avancée de l'élément coulissant (50), la surface d'extrémité (30) en direction desdites piles.

6. Boîtier selon la revendication 4 ou 5, **caractérisé en ce que** lesdits taquets (62) sont aptes à venir en butée contre ladite surface d'extrémité (30), dans une position reculée de l'élément coulissant (50).

7. Boîtier selon l'une des revendications 1 à 6, **caractérisé en ce que** l'élément coulissant (50) est pourvu de languettes latérales (58) aptes à s'engager dans des rainures (46) du boîtier (4).

8. Boîtier selon la revendication 7, **caractérisé en ce que** les languettes (58) s'évasent depuis l'intérieur vers l'extérieur de l'élément coulissant (50).

9. Boîtier selon l'une des revendications 1 à 8, **caractérisé en ce que** ledit élément complémentaire est un élément pivotant (52) relié audit élément coulissant (50) par une charnière (54).

10. Jouet équipé d'un boîtier à piles conforme à l'une des revendications 1 à 9.

## Patentansprüche

1. Batteriegehäuse (4) für ein Spielzeug (2), vom Typ mit einer Aufnahme (10) zum Aufnehmen von in Reihe geschalteten und einen Stromkreis bildenden Batterien (P, P'), die mittels einer abnehmbaren Kappe (6) mit einem Gleitelement (50) verschließbar ist, wobei die Aufnahme (10) zumindest zwei Fächer (12, 14) enthält, von denen ein erstes Fach (12) zumindest eine endseitige Batterie (P) des Stromkreises aufnimmt, **dadurch gekennzeichnet, dass** das Gleitelement (50) dazu bestimmt ist, in einer vorgerückten Stellung das erste Fach (12) zu überdecken, wobei die Kappe (6) ein zusätzliches Verschließteil (52) aufweist, das in der vorgerückten Stellung des Gleitelements (50) freigebbar ist, um Batterien (P') in zumindest ein an das erste Fach (12) angrenzendes zweites Fach (14) einzulegen, und wobei die Kappe (6) mit Mitteln (62) versehen ist, um das Gleitelement (50) in seiner vorgerückten Stellung zu sichern, wenn die Batterien (P') im zweiten Fach (14) angeordnet sind.

2. Gehäuse nach Anspruch 1, **dadurch gekennzeichnet, dass** die Fächer (12, 14) in Verschieberichtung der Kappe (6) angeordnet sind.

3. Gehäuse nach Anspruch 1 oder 2, **dadurch gekennzeichnet, dass** die Sicherungsmittel Nasen (62) aufweisen, die von der Innenseite (50A) des Gleitelements (50) abstehen und in Anschlag am Endabschnitt der im zweiten Fach (14) angeordneten Batterien (P') bringbar sind.

4. Gehäuse nach Anspruch 3, **dadurch gekennzeichnet, dass** die Aufnahme eine entlang der Verschiebeachse (A) des Gleitelements (50) elastisch verformbare Endfläche (30) aufweist.

5. Gehäuse nach Anspruch 4, **dadurch gekennzeichnet, dass** das Zusatzteil (52) mit Vorsprüngen (66) versehen ist, welche in der vorgerückten Stellung des Gleitelements (50) die Endfläche (30) in Richtung der Batterien zu drücken vermögen.

6. Gehäuse nach Anspruch 4 oder 5, **dadurch gekennzeichnet, dass** die Nasen (62) in der zurückgeschobenen Stellung des Gleitelements (50) in Anschlag an die Endfläche (30) bringbar sind.

7. Gehäuse nach einem der Ansprüche 1 bis 6, **dadurch gekennzeichnet, dass** das Gleitelement (50) mit Seitenlaschen (58) versehen ist, die in Rillen (46) des Gehäuses (4) eingreifen können.

8. Gehäuse nach Anspruch 7, **dadurch gekennzeichnet, dass** die Laschen (58) sich von innerhalb nach außerhalb des Gleitelements (50) erweitern.

9. Gehäuse nach einem der Ansprüche 1 bis 8, **dadurch gekennzeichnet, dass** das Zusatzteil ein Schwenkteil (52) ist, das durch ein Scharnier (54) mit dem Gleitelement (50) verbunden ist.

10. Spielzeug, das mit einem Batteriegehäuse nach einem der Ansprüche 1 bis 9 ausgestattet ist.

## Claims

1. Battery casing (4) for a toy (2), of the type comprising a seating (10) for accommodating batteries (P, P') in series forming an electrical circuit, intended to be closed by means of a movable cover (6) comprising a sliding element (50), the said seating having at least two compartments (12, 14), a first compartment (12) of which accommodates at least one end battery (P) of the circuit, **characterised in that** the said sliding element (50) is intended to cover, in a forward position, the said first compartment (12), the said cover (6) having a complementary closing element (52) capable of being released, when the sliding element (50) is in the forward position, for the introduction of batteries (P') into at least a second compartment (14) adjacent to the said first compartment (12) and the cover (6) being equipped with means (62) for locking the sliding element (50) in its forward position when the batteries (P') have been placed in the second compartment (14).

2. Casing according to Claim 1, **characterised in that** the said compartments (12, 14) are arranged in the direction of movement of the cover (6).

3. Casing according to Claim 1 or 2, **characterised in that** the locking means comprise catches (62) projecting from the interior face (50A) of the sliding element (50) and capable of coming into abutment with the end of the said batteries (P') placed in the said second compartment (14).

4. Casing according to Claim 3, **characterised in that** the seating has an end surface (30) that is elastically deformable along the axis of movement (A) of the sliding element (50).

5. Casing according to Claim 4, **characterised in that** the complementary element (52) is equipped with nibs (66) capable of pushing back the end surface (30) towards the said batteries when the sliding element (50) is in the forward position.

6. Casing according to Claim 4 or 5, **characterised in that** the said catches (62) are capable of coming into abutment with the said end surface (30) when the sliding element (50) is in a retracted position.

7. Casing according to one of Claims 1 to 6, **characterised in that** the sliding element (50) is provided with lateral tongues (58) capable of engaging in grooves (46) in the casing (4).

8. Casing according to Claim 7, **characterised in that** the tongues (58) widen from the interior towards the exterior of the sliding element (50).

9. Casing according to one of Claims 1 to 8, **characterised in that** the said complementary element is a pivoting element (52) connected to the said sliding element (50) by a hinge (54).

10. Toy equipped with a battery casing according to one of Claims 1 to 9.
